**Europäisches Patentamt**

**European Patent Office**

**Office européen des brevets**

(11) Publication number: **0 077 306**
A2

# EUROPEAN PATENT APPLICATION

(21) Application number: **82830240.6**

(22) Date of filing: **23.09.82**

(51) Int. Cl.³: **H 02 K 53/00**

(30) Priority: **08.10.81 IT 8413681**

(71) Applicant: **Valenti, Giuseppe, Via Parolari, 42, I-30174 Venezia-Zelarno (IT)**

(43) Date of publication of application: **20.04.83 Bulletin 83/16**

(72) Inventor: **Valenti, Giuseppe, Via Parolari, 42, I-30174 Venezia-Zelarno (IT)**

(84) Designated Contracting States: **AT BE CH DE FR GB LI LU NL SE**

(74) Representative: **Zorzoli, Franco, c/o BUGNION S.p.A. Via Carlo Farini 81, I-20159 Milan (IT)**

(54) **A rotating also self-working device for the production of costless electric energy.**

(57) The present invention relates to a rotating, also selfworking device for the production of costless electric energy being composed of a preferably direct current electric motor (5), which, by means of interposed gears (2 and 4) idly mounted on a fixed casing, causes the operation of the power shaft of a generator (7) which is able to supply electric energy to possible utilizers and also to give back to said motor a quantity of energy sufficient to allow it to work, upon its transformation into direct current by means of an appropriate transformer-commuter-chopper (11), the starting of said device being assured by a storage battery (10) which supplies said motor.

A rotating also self-working device for the production
of costless electric energy

The present invention relates to a rotating, also self-working device for the production of costless electric energy where the cause suitable to structurally produce the predetermined power of a direct current motor is associated to a co-existing cause of forces acting as a lever which are more advantageously interposed between the motor itself and a generator, indirectly synchronized in connection with their similar or different speeds, in order to produce , though between lower motor power and higher resisting power by the generatrix , a relative compensation by said forces which (within the limits of the electric parameters arranged both upstream and downstream) interfere and simultaneously make up for the resultant of effect which originates greater than the cause.

In fact, the present device provided with a motor and a generator which, by way of example, would perform an equal number of revolutions per minute, not only allows the introduction therein of a greater number of active forces than the passive ones, but also, depending on the speed thereof, it allows that, the generator being energized and under load, this introduction would occur in the motor at the same instant, obviously with an approximation to the nearest whole number below; it is therefore obvious that, by the appropriate proportionality of interference between said forces the suitable number of revolutions can be achieved or a higher speed of the generator and therefore a corresponding compensation of greater power-efficiency, downstream, with respect to the power absorbed by the motor upstream, though diversifications of associated electrodynamic phenomena related to amperage and voltage between the motor and the generator themselves can take place. For the purpose it is therefore desirable, in this invention, to adjust the direct current motor and generator so that, due to a precise construction of them both, the features of said powers are included within the limits of parameters which must be sought and which are necessary, case by case, in order to avoid superfluous leakages between the different components determining the resultant, as well as dangerous total or partial failure in the structures arranged in the device.

However it can readily be understood that, with a motor and generator running at the same speed and the introduction of greater resisting electric power (under load downstream) the number of revolutions or speed of a motor provided with lower propulsive power (upstream) would obviously tend to a progressive decreasing; for that reason many advantageous more active or non-controvertible and well-adjusted forces acting as a lever are necessary in the device, so that the adjustment of the two respective speeds which have been previously synchronized can always go on in the same way in order to enable, at the same instant, a relative interference suitable to allow the generator to supply as much power as possible, while absorbing less motor power within the limits of the parameters provided therefor and expressly created for the purpose.

- 3 -

In the accompanying drawings which help the understanding of the specification:

- Fig. 1 is a side view of the gears connecting the motor to the generator allowing to understand the operation thereof; and

- Fig. 2 is a diagrammatic view of the device according to the invention.

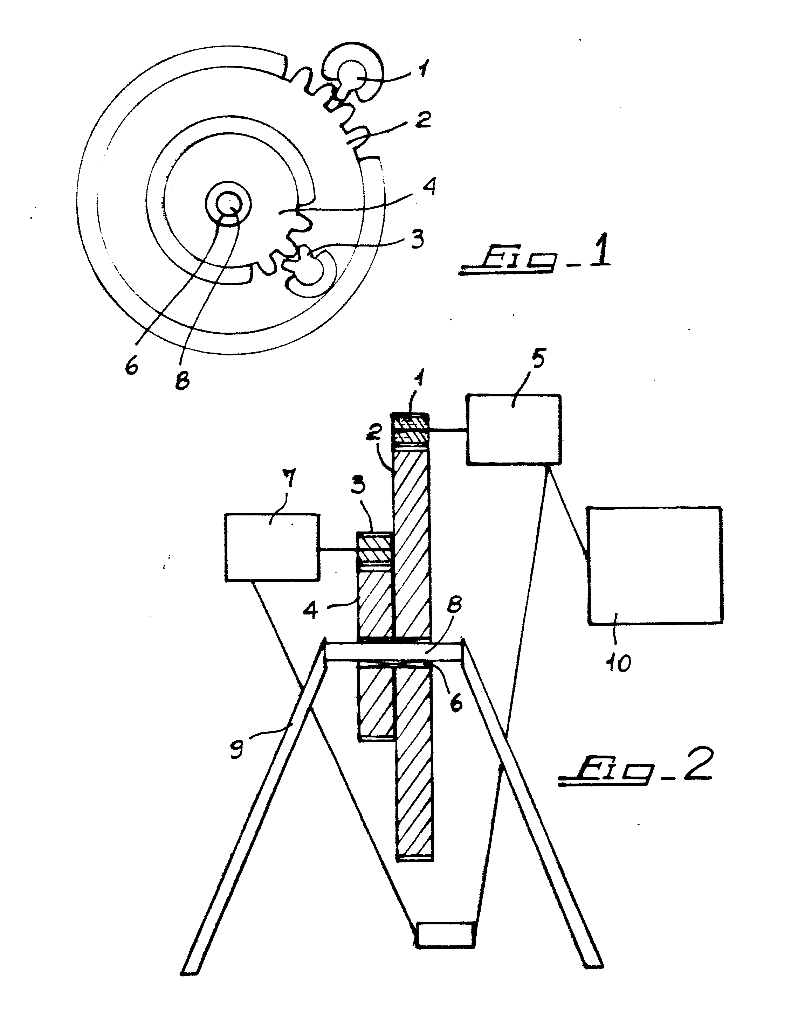

In the figures we have indicated at 2 and 4 two like or unlike coaxial gears incorporated together and tightly located, by means of their central hole, on the external ring of a ball bearing 6. A pinion 1 accommodated in the projecting part of the drive shaft 5 is coupled to gear 2 while a pinion 3 housed in the projecting part of the generator shaft 7 is coupled to gear 4. The number of teeth between the gears and the pinions is different when they are coupled but it may also be the same or in any case in connection with their module and diameters.

An axis 8 is fitted in the inner ring of the ball bearing 6 and it is locked at its sides in the support 9. It is therefore evident that the gears 2 and 4 incorporated together and superimposed on the outer ring of the ball bearing itself 6 both turn simultaneously and therefore at the same rotary speed.

The operation takes place as follows: the motor 5 starts being supplied by one or more storage batteries 10 or by any other source of electric energy; when said motor with pinion 1 and gears 2 and 4, as well as the under load energized generator 7 with pinion 3 reach their predetermined number of revolutions, that is when the device is in a position to absorb and give back, as provided, the power related to forces by speeds, from the amount of power supplied downstream (generator area) a required amount is passed upstream (motor area) by means of a transformer-commutator-chopper 11 already arranged to allow this supply connection; this passage is made possible by the fact that the motor 5 requires less power than the power coming from generator 7 while the difference is available for other different purposes and a timely use.

Obviously, the above described arrangement can be made in other ways, always without departing from the spirit and scope of this invention.

# C L A I M S

1) A rotating also self-working device for the production of costless electric energy characterized in that said device allows an effect which is greater than the cause, which results both from the absorbed motor power and from the associated co-existing cause of advantageous forces acting as a lever interposed between a motor and a generator, indirectly synchronized in connection with their similar or different speeds in order to produce, though between lower motor power and higher resisting power, a relative interferential compensation which (within the limits of the electric parameters arranged both upstream and downstream) simultaneously make up for the resultant of useful power.

2) A rotating device according to claim 1, characterized in that, owing to the pre-arranged amount of more active forces related to the passive ones in the mechanism, natural electrodynamic phenomena occur which originate less voltage and more amperage (or vice-versa) downstream, with respect to the amperage and voltage which occur upstream, being therefore necessary, before allowing the device to self-operate, to carry out comparative researches so that the relative parameters of the generator and motor may coincide in accordance with their original construction features, or to adjust them by means of suitable apparatus or instruments according to the case.

3) A rotating device according to claims 1 and 2, characterized in that gears 2 and 4 are both coaxial and incorporated together in order to synchronize their respective speeds by an indirect coupling between engine 5 and generator 7.

4) A rotating device according to claims 1 to 3, characterized in that said gears 2 and 4 and pinions 1 and 3 can have a similar module and number of teeth or not.

5) A rotating device according to claims 1 to 4, characterized in that gears 2 and 4, through a central hole, are superimposed either slidably in a suitable bushing or tightly on the outer ring of the ball bearing 6 and an axis 8 is steadily fitted in the inner ring thereof and is locked at its sides, by suitable means, in the support 9, while alternatively said axis 8 can be tightly fitted, at its sides, together with gears 2 and 4, in the inner rings of two ball bearings 6 (instead of one) and the outer rings would therefore be locked by means of supports at the sides of support 9, so that said axis and said gears are integral and can move simultaneously and rotatably together.

6) A rotating device, according to claims 1 to 5, characterized in that the motor 5 (which must preferably be a DC motor) is supplied by the storage battery 10 or by any other source of electric energy, and when said motor with pinion 1, gears 2 and 4 and said generator 7 with pinion 3 reach their predetermined speed, by a suitable resistor and an appropriate rheostat the generator is energized to its utmost normal efficiency, the energy of which being supplied downstream  being greater than the energy being absorbed upstream.

7) A rotating device according to claims 1 to 6, characterized in that, through chopper 11, the commutation of the power required by said motor is carried out (if necessary suitably transformed according to the appropriate amperage and voltage parameters) and, as said motor requires less energy than produced by the generator, the excess difference is timely utilized for other work purposes or different uses.

8) A rotating device according to claims 1 to 7, characterized in that gears 2 and 4 and pinions 1 and 3 can be made of any heavy or light material or replaced by pulleys, while motor 5 and generator 7 or other current generator can have the same voltage-amperage-speed or not, being also possible to increase their number and to arrange them in the same way in the device.

9) A rotating device, according to claims 1 to 8, characterized in that the storage battery 10 or any other source of electric power at the beginning can be replaced in the device by an explosion engine, a power unit or any other propelling means, till the electric motor and generator, having a predetermined load, are in a position to work independently, being therefore possible at this time to cut out the explosion engine.

10) A rotating device according to claims 1 to 9, characterized in that the amount of utilizable electric energy produced at the same time can be whatever, in connection with an appropriate number of separately
arranged devices, provided that said devices are all
electrically connected together.

*Fig_1*

*Fig_2*